Europäisches Patentamt

European Patent Office

Office européen des brevets

(11) Publication number: **0 046 511**
**B1**

(12) **EUROPEAN PATENT SPECIFICATION**

(45) Date of publication of patent specification: **04.06.86**

(51) Int. Cl.⁴: **B 23 B 27/16, B 23 B 27/22**

(21) Application number: **81105784.3**

(22) Date of filing: **22.07.81**

(54) **Cutting insert.**

(30) Priority: **27.08.80 US 181770**

(43) Date of publication of application:
**03.03.82 Bulletin 82/09**

(45) Publication of the grant of the patent:
**04.06.86 Bulletin 86/23**

(84) Designated Contracting States:
**AT BE CH DE FR GB IT LI LU NL SE**

(56) References cited:
**DE-A-2 840 610**
**DE-A-2 845 211**
**GB-A-1 516 399**
**US-A-3 973 308**
**US-A-4 068 976**
**US-A-4 140 431**
**US-A-4 180 355**

(73) Proprietor: **KENNAMETAL INC.**
**One Lloyd Avenue P.O. Box 231**
**Latrobe Pennsylvania 15650 (US)**

(72) Inventor: **Warren, Donald Wilson**
**R.D. 4 Box 170B**
**Latrobe Pennsylvania 15650 (US)**

(74) Representative: **Leiser, Gottfried, Dipl.-Ing. et al**
**Patentanwälte Prinz, Bunke & Partner**
**Ernsberger Strasse 19**
**D-8000 München 60 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention concerns cutting inserts of the type defined in the pre-characterizing part of claim 1.

Indexable and invertable cutting inserts are known that may be releasably held in a pocket of a toolholder while removing material from a workpiece. A wide variety of chipbreaker configurations are known for use with such inserts and comprise separate super structures that help clamp the insert in the pocket of the toolholder and also include configurations that can be molded into one of the top or bottom faces of the cutting insert. Cutting inserts with the molded chipbreaker groove are usually formed of a hard wear resistant material such as a ceramic or cemented hard metal carbide material.

The wide variety of grooves molded in such material may best be reviewed by perusing United States Patent Nos. 4,140,431, granted to Friedline et al; 4,068,976, granted to Friedline; 3,975,809, granted to Sorice et al; and 3,781,956, granted to Jones et al; 3,973,307, granted to McCreery et al; and United States Patent No. 4,180,355, granted to Nanini, and assigned to Societe Ingman.

In addition, cutting inserts are known that have planar parallel top and bottom faces with spherical dimples spaced along the cutting edges of the insert formed in one of the planar parallel surfaces and spaced along the cutting edge of the insert.

Cutting inserts with a land area extending inwardly from the cutting edge, a planar descending wall extending inwardly from the land area downwardly and individual discrete recesses formed and spaced inwardly from and along the length of the cutting edges are known from US—A—3 973 308. Another cutting insert having adjacent recesses extending along the cutting edges is known from DE—A—2 845 211. The recesses or notches are shaped and arranged in such a manner that the chip can pass or slide over them without being broken or further drastically deformed or worked.

It is an object of the present invention to provide an improved chipbreaking configuration in a molded chipbreaker on a cutting insert. More particularly, the invention aims at imparting to the chip material to be removed a stiffer and stronger configuration so that the chip will break more easily.

The cutting insert of the present invention as defined in claim 1 comprises a body that has top and bottom faces and a peripheral wall joining these top and bottom faces. The body has a polygonal shape when viewed in plan. Cutting edges are formed at the juncture of the peripheral wall with one of the top and bottom faces. A land area extends inwardly from the cutting edge, and a planar descending wall extends inwardly from the land area downwardly. A planar floor extends towards the center of the body. Individual discrete recesses are formed and spaced inwardly from and along the length of the cutting edges. When viewed in side, the recesses appear concave facing outwardly. The cutting insert of the invention is characterized in that

— said planar descending wall (20) extends to said planar floor (22);

— said recesses (18) extend inwardly from the line of juncture between said land area (21) and said planar descending wall (20); and

— said recesses (18) are bounded by planar side walls (30).

In a particular embodiment of the invention, the cutting edge is formed at the juncture of the peripheral wall and only one of the top and bottom faces.

Preferably, the recesses are uniformly shaped and form portions of an imaginary cylinder having a longitudinal axis that runs parallel to the adjacent cutting edge. The imaginary cylinder preferably has a radius of from 0,762 to 1,27 mm.

The exact nature of the present invention will become more clearly apparent upon reference to the following detailed specification taken in connection with the accompanying drawings in which:

Figure 1 is a plan view of an embodiment of an insert according to the present invention.

Figures 2 and 2A are cross sectional views illustrating specific features of an insert for which no protection is sought as far as the insert has no land area adjacent to its cutting edge.

Figure 3 is a partial cross section showng the side walls of the recesses in the insert according to the present invention.

Figure 4 is a partial cross sectional view of a cutting insert shown in Figure 1.

Detailed Description of the Invention

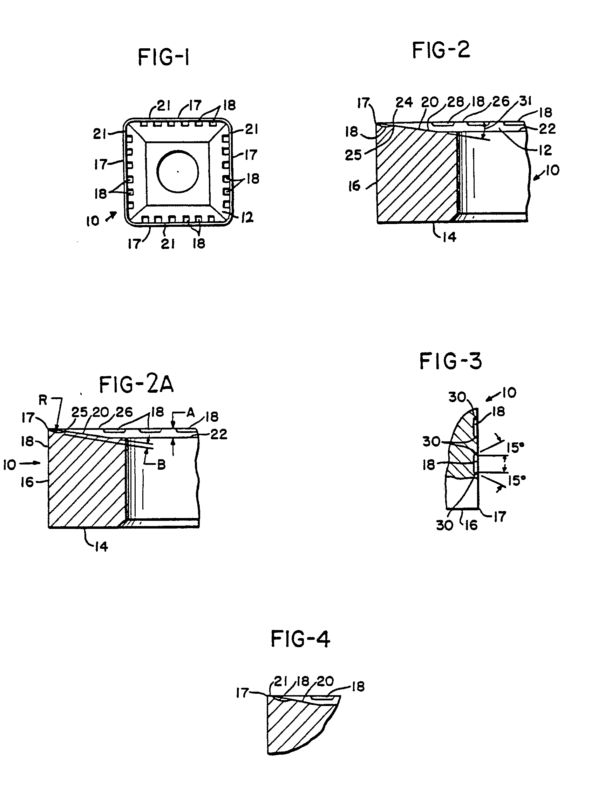

Referring to the drawings somewhat more in detail, what is shown in Figure 1 and 2 is the cutting insert 10 comprised of a body of hard wear resistant material, such as a cemented hard metal carbide, having a top face 12 and bottom face 14 that are joined by peripheral wall 16 extending therebetween. Cutting edges 17 are formed at the juncture of the peripheral wall 16 with the top face 12 of insert 10. Recesses 18 are formed in the top face 12 and spaced along the cutting edge 17.

Shown more clearly in Figure 2, the cutting insert 10 has the top and bottom faces 12 and 14 with the peripheral wall 16 joining said top and bottom faces. In the top face 12, there is a cutting edge 17 and a descending wall portion 20 that extends downwardly and inwardly from the cutting edge 17 until it meets a planar floor 22 that extends toward the center of the insert 10. The cross section of the insert 10; shown in Figure 2 is taken through one of the recesses 18 formed along the cutting edge 17 of the insert 10. As can be seen, the recess 18 is formed in the descending wall 20. Preferably, the descending wall 20 is planar in nature. When viewed in a side cross sectional view, the recess 18 is concave facing upwardly or outwardly of the insert body 10.

Recess 18 has a juncture line 24 where the innermost portion of the recess 18 joins the planar wall 20. Preferably, the cutting edges 17 of the cutting insert 10 are angularly related and define an imaginary plane as at 26 in Figure 2. Further, the loci of all the junctures 24 of the recesses 18 would lie in an imaginary line that would extend into the paper of Figure 2 and lie adjacent to the cutting edge 17 of the insert 10. The point of this line is illustrated as at 25 in Figure 2.

A first imaginary plane 26 is defined as containing the angularly related cutting edges 17 and the second imaginary plane 28 is formed and is defined as containing a cutting edge 17 along with the adjacent imaginary line 25. These first and second imaginary planes 26 and 28 form an acute included angle shown at 31 in Figure 2. Preferably, the angle shown at 31 in Figure 2 is approximately 15 degrees, although it is believed it could lie in the range of from 10 to 20 degrees.

Figure 2 shows the same picture as that shown in Figure 2 but very clearly pointing out more dimensional relationships of the cutting insert according to the present invention. As is mentioned in Figure 2, the imaginary planes 26 and 28 are shown having an acute included angle which is preferably about 10 degrees. The perpendicular distance between the first defined imaginary plane of the cutting edge 17 and the planar floor 22 of the cutting insert 10 is shown by dimension A in the drawing. Dimension A is preferably 0,457 mm, plus or minus 0,127 mm.

The recesses 18 may be defined as being portions of a right circular cylinder whose longitudinal axis runs substantially parallel to the cutting edge 17 of the insert 10. Shown in Figure 2A, the cylinder would have a radius R where R is preferably 1,092 mm, plus or minus 0,127 mm, although wider ranges may be used, depending upon the feeds and speeds with which the insert is intended to be used.

The recess 18 has a lowermost point that may be measured as a perpendicular distance from the second imaginary plane 28. This lowermost point is shown at B in Figure 2A and is preferably 0,127 mm, plus or minus 0,0254 mm, although this depth could range from 0,051 to 0,254 mm, depending upon cutting conditions. The recess 18 is shown as it extends from the cutting edge 17 inwardly until it joins the descending wall 20 of the cutting insert 10, and this distance is, preferably, 1,016 mm, plus or minus 0,0762 mm, although the distance may also range from 0,51 to 1,27 mm, depending upon feed conditions. When viewed in plan the recesses are preferably square in appearance, having a length along the cutting edges that equals the distance that the recess extends inwardly of the cutting insert 10 from the cutting edge 17.

Referring again to Figure 1, the recesses 18 are spaced around the four cutting edges 17. As can be seen in the plan view, the recesses 18 have a rectangular or square shape when viewed in plan, and as shown more clearly in Figure 3, the recesses 18 have side walls 30 that bound the recesses 18 as they extend inwardly from the cutting edge 17 to their juncture 19 with descending wall 20.

Shown more clearly in Figure 3, the side walls 30 are shown having a preferable 15 degree angle with the perpendicular drawn to the planar surface of the descending wall 20.

It has been found that, when using an insert according to the above-described invention, it appears to break chips that are being removed from a workpiece, especially when working with metal and other like substances.

The cutting insert shown in Figure 1 has a landed area 21 located behind the cutting edge 17 and extending around the insert 10. The land 21 preferably has a width of approximately 0,127 mm, but may be in the range of from 0,1016 to 0,762 mm.

The length of the recesses 18 measured from the cutting edge 17 inwardly of the insert 10 may vary with the size of the insert. A greater length of the recess is better when the purpose is to have lower horsepower because the recess has a larger radius of curvature and, therefore, there is less crowding of chips. When cutting stainless steel, and chip control is important, a shorter recess length may be used, but the horsepower requirement may be raised.

The inserts according to the present invention are preferably coated by any of the well-known coating processes, one of which is disclosed in applicant's own United States Patent No. 4,035,541 and other coating processes, such as aluminum oxide coatings, that have been found suitable for cemented carbide cutting inserts.

Modifications may be made within the scope of the appended claims.

## Claims

1. A cutting insert (10) for removing material from a workpiece, comprising a body having top (12) and bottom (14) faces and a peripheral wall (16) joining said faces, said body having a polygonal shape when viewed in plan, cutting edges (17) formed at the juncture of said peripheral wall with one (12) of said top and bottom faces (12, 14), a land area (21) extending inwardly from the cutting edge (17), a planar descending wall (20) extending inwardly from the land area (21) downwardly and a planar floor (22) extending toward the center of said body, individual discrete recesses (18) being formed and spaced inwardly from and along the length of the cutting edges (17) and appearing concave facing outwardly when viewed in side, characterized in that

— said planar descending wall (20) extends to said planar floor (22);

— said recesses (18) extend inwardly from the line of juncture between said land area (21) and said planar descending wall (20); and

— said recesses (18) are bounded by planar side walls (30).

2. A cutting insert according to claim 1, characterized in that an imaginary line (25) can be formed through the loci of the juncture of the innermost portion of said recesses (18) with said descending wall (20) and the distance from the adjacent cutting edge (17) to the imaginary line (25) is in the range of 0.762 mm to 1.27 mm.

3. A cutting insert according to claim 1 or 2, characterized in that said cutting edge (17) is formed at the juncture of said peripheral wall (16) and only one (12) of said top and bottom faces (12, 14).

4. A cutting insert according to any of claims 1 to 3, characterized in that the recesses (18) are uniformly shaped and form portions of an imaginary cylinder having a longitudinal axis that runs parallel to the adjacent cutting edge (17).

5. A cutting insert according to claim 4, characterized in that said imaginary cylinder has a radius of from 0.762 to 1.27 mm.

## Revendications

1. Pastille rapportée de coupe (10) destinée à enlever de la matière d'une pièce, comprenant un corps ayant une face supérieure (12) et une face inferieure (14) ainsi qu'une paroi périphérique (16) reliant les faces, le corps ayant une forme polygonale en plan, des bords de coupe (17) formés au raccord de la paroi périphérique avec l'une (12) des faces supérieure et inférieure (12, 14), une portée (21) dirigée vers l'intérieur à partir du bord de coupe (17), une paroi plane descendante (20) dirigée vers l'intérieur à partir de la portée (21) et vers le bas, et un fond plan (22) dirigé vers le centre du corps, des évidements séparés individuels (18) étant formés le long des bords de coupe (17) et étant espacés vers l'intérieur par rapport aux bords de coupe et le long de ceux-ci et apparaissant sous forme concave tournés vers l'extérieur, en élévation latérale, caractérisée en ce que:

— la paroi plane descendante (20) rejoint le fond plan (22),

— les évidements (18) sont dirigés vers l'intérieur à partir de la droite de raccordement de la portée (21) et de la paroi plane descendante (20), et

— les évidements (18) sont délimités par des parois latérales planes (30).

2. Pastille rapportée de coupe selon la revendication 1, caractérisée en ce qu'une droite imaginaire (25) passe par les lieux de raccordement de la partie interne des évidements (18) avec la paroi descendante (20), et la distance comprise entre le bord de coupe adjacent (17) et la droite imaginaire (25) est comprise entre 0,762 et 1,27 mm.

3. Pastille rapportée de coupe selon l'une des revendications 1 et 2, caractérisée en ce que le bord de coupe (17) est formé au raccord de la paroi périphérique (16) et de l'une seulement (12) des faces supérieure et inférieure (12, 14).

4. Pastille rapportée de coupe selon l'une quelconque des revendications 1 à 3, caractérisée en ce que les évidements (18) ont une configuration uniforme et constituent des parties d'un cylindre imaginaire ayant un axe longitudinal qui est parallèle au bord de coupe adjacent (17).

5. Pastille rapportée de coupe selon la revendication 4, caractérisée en ce que le cylindre imaginaire a un rayon compris entre 0,762 et 1,27 mm.

## Patentansprüche

1. Schneideinsatz (10) zur Entfernung von Material von einem Werkstück, mit einem Körper, der eine Deckfläche (12) und eine Bodenfläche (14) sowie eine diese Flächen verbindende Umfangswand (16) aufweist, wobei der genannte Körper in Draufsicht betrachtet polygonförmig ist, wobei Schneidkanten (17) an der Vereinigung der genannten Umfangswand mit einer (12) der beiden Flächen (12, 14), nämlich Deckfläche und Bodenfläche, gebildet sind, ein Fasenbereich (21) sich von der Schneidkante (17) ausgehend einwärts erstreckt, eine ebene absinkende Wand (20) sich von dem Fasenbereich (21) einwärts nach unten erstreckt sowie ein ebener Boden (22) sich zur Mitte des Körpers hin erstreckt, wobei ferner einzelne diskrete Ausnehmungen (18) entlang der Längsrichtung der Schneidkanten (17) gebildet und in Einwärtsrichtung von diesen beabstandet sind sowie ein konkaves Erscheinungsbild aufweisen und von der Seite betrachtet nach außen gewendet sind, dadurch gekennzeichnet, daß

— die genannte ebene absinkende Wand (20) sich bis zu dem ebenen Boden (22) erstreckt;

— die genannten Ausnehmungen (18) sich von der Vereinigungslinie zwischen dem genannten Fasenbereich (21) und der genannten ebenen absinkenden Wand (20) einwärts erstrecken; und

— die genannten Ausnehmungen (18) durch ebene Seitenwände (30) begrenzt sind.

2. Schneideinsatz nach Anspruch 1, dadurch gekennzeichnet, daß eine gedachte Linie (25) durch die Orte der Vereinigung des innersten Teils der genannten Ausnehmungen (18) mit der genannten absinkenden Wand (20) gebildet werden kann und der Abstand von der benachbarten Schneidkante (17) bis zu der gedachten Linie (25) im Bereich von 0,762 mm bis 1,27 mm liegt.

3. Schneideinsatz nach Anspruch 1 oder 2, dadurch gekennzeichnet, daß die genannte Schneidkante (17) an der Vereinigung der genannten Umfangswand (16) mit nur einer (12) der genannten Flächen (12, 14) nämlich Deckfläche und Bodenfläche, gebildet ist.

4. Schneideinsatz nach einem der Ansprüche 1 bis 3, dadurch gekennzeichnet, daß die Ausnehmungen (18) gleichmäßig geformt sind und Teile eines gedachten Zylinders bilden, welcher eine Längsachse aufweist, die sich parallel zu der benachbarten Schneidkante (17) erstreckt.

5. Schneideinsatz nach Anspruch 4, dadurch gekennzeichnet, daß der genannte gedachte Zylinder einen Radius von 0,762 bis 1,27 mm aufweist.

FIG-I

FIG-2

FIG-2A

FIG-3

FIG-4